# EUROPÄISCHE PATENTSCHRIFT

(11) **EP 3 443 267 B1**
(45) Veröffentlichungstag und Bekanntmachung des Hinweises auf die Patenterteilung: **19.01.2022**
(21) Anmeldenummer: 17712043.3
(22) Anmeldetag: 10.03.2017
(51) Int. Cl.: F24C 7/08, H05B 6/64

(54) **GARGERÄT MIT EINER FLÄCHENANTENNE UND VERFAHREN ZUM BETREIBEN EINES GARGERÄTS**
COOKING APPLIANCE HAVING A PLANAR ANTENNA AND METHOD FOR OPERATING A COOKING APPLIANCE
APPAREIL DE CUISSON PRÉSENTANT UNE ANTENNE PLANE ET PROCÉDÉ POUR FAIRE FONCTIONNER L'APPAREIL DE CUISSON

(30) Priorität: 15.04.2016 DE 102016206342
(43) Veröffentlichungstag der Anmeldung: 20.02.2019
(73) Patentinhaber: BSH Hausgeräte GmbH, 81739 München (DE)
(72) Erfinder: BAUER, Hans-Jürgen, 83278 Traunstein (DE); BEIFUSS, Wolfgang, 83339 Chieming (DE); PFERSCH, Harald, 83395 Freilassing (DE); STEINBACHER, Manfred, 83334 Inzell (DE); THALHEIMER, Martin, 83246 Unterwössen (DE)
(86) Internationale Anmeldenummer: PCT/EP2017/055707
(87) Internationale Veröffentlichungsnummer: WO 2017/178160

(56) Entgegenhaltungen:
- EP-A1- 2 662 629
- EP-A1- 2 663 160
- DE-A1-102008 029 230
- DE-A1-102009 047 416

## Beschreibung

Die vorliegende Erfindung betrifft ein Gargerät mit einer Flächenantenne und ein Verfahren zum Betreiben eines Gargeräts umfassend die Flächenantenne sowie einen in einem Garraum des Gargeräts angeordneten Sensor.

Gargeräte sind zum Garen von Gargut, wie Lebensmittel oder Speisen, eingerichtet. Maßgeblich für einen Garvorgang ist insbesondere die Temperatur des Garguts. Daher ist es erwünscht, dass die Temperatur des Garguts messbar und/oder überwachbar ist. Sowohl die Temperatur als auch ein zeitlicher Temperaturverlauf kann erheblichen Einfluss auf die Beschaffenheit des Garguts haben. Neben der Temperatur können auch weitere Parameter für einen Garvorgang relevant sein.

Zur Messung der Garguttemperatur kommen üblicherweise Sensoren mit Temperaturfühlern zum Einsatz, welche von außen in das Gargut eingebracht werden. Diese sind z.B. als Temperaturspieß ausgebildet, welcher in das Gargut eingestochen wird. Dabei ist es vorteilhaft, wenn der Sensor unabhängig von dem Gargerät ist, d.h. insbesondere dass er keine Kabelverbindung mit dem Gargerät benötigt. Nur dann ist es möglich, den Sensor benutzerfreundlich außerhalb des Garraums in dem Gargut zu platzieren und/oder das Gargut mitsamt dem darin platzierten Sensor während des Garvorgangs zu bewegen, z.B. mittels eines Drehspießes.

Hierbei ist ein Aspekt, die gemessene Temperatur an einen Benutzer und/oder eine Steuereinrichtung des Gargeräts mittels einer drahtlosen Kommunikationsverbindung zu dem Sensor auszugeben.

Eine derartige Vorrichtung ist aus der europäischen Patentanmeldung EP 2663160 A1 bekannt. Die darin beschriebene Vorrichtung weist einen Behandlungsraum und eine Koppeleinrichtung auf. Die Koppeleinrichtung dient zur Übertragung elektromagnetischer Wellen in den Behandlungsraum. Dabei ist die Koppeleinrichtung in einem Nebenraum angeordnet und der Nebenraum ist über eine Trennwand von dem Behandlungsraum getrennt. Die Koppeleinrichtung ist dazu ausgebildet, zwischen einer ersten metallischen Wand und einer benachbarten zweiten metallischen Wand ein elektromagnetisches Feld zu erzeugen. Zudem ist eine Öffnung vorgesehen, aus welcher elektromagnetische Strahlung in den Behandlungsraum gestrahlt wird.

Vor diesem Hintergrund besteht eine Aufgabe der vorliegenden Erfindung darin, eine verbesserte Vorrichtung bereitzustellen, um eine drahtlose Kommunikation mit einem sich in dem Garraum eines Gargeräts angeordneten Sensor zu ermöglichen.

Demgemäß wird ein Gargerät mit einem Garraum zum Garen von Gargut vorgeschlagen. Das Gargerät umfasst zumindest ein in dem Garraum angeordnetes Luftleitblech, eine Sende/Empfangseinheit zum Senden und/oder Empfangen eines Hochfrequenzsignals und eine Koppelvorrichtung zum Koppeln der Sende/Empfangseinheit und des Luftleitblechs. Dabei ist das Luftleitblech als eine Flächenantenne zur Übertragung des Hochfrequenzsignals zwischen der Koppelvorrichtung und einem in dem Garraum anordenbaren Sensor ausgebildet.

Dies ermöglicht es vorteilhafterweise, dass ein durch einen mobilen Sensor, wie beispielsweise einem Temperaturspieß, bereitgestelltes Signal an weitere Geräte, z.B. eine Anzeigeeinrichtung und/oder eine Steuerungsvorrichtung übertragen werden kann. Insbesondere kann dies mittels der vorgeschlagenen Anordnung von Sende/Empfangseinheit, Koppelvorrichtung und dem als Flächenantenne ausgebildeten Luftleitblech in einer visuell unauffälligen Weise geschehen, da alle Bauteile hinter dem Luftleitblech und/oder außerhalb des Garraums angeordnet werden können oder sogar an einer beliebigen Stelle außerhalb des Garraums. Weiterhin ist es vorteilhaft, dass keine separate Antenne benötigt wird, wodurch die Komplexität des Gargeräts nicht weiter gesteigert wird. Hierdurch wird eine Fertigung vereinfacht und Kosten werden einspart. Zudem können mittels der vorgeschlagenen Anordnung auch bestehende Gargeräte mit dieser Funktionalität nachgerüstet werden.

Ein Garraum ist ein von Seitenwänden umschlossenes Volumen, wobei die Seitenwände insbesondere dazu eingerichtet sind, auch hohen oder sehr hohen Temperaturen zu widerstehen. Hohe, beziehungsweise sehr hohe Temperaturen, sind beispielsweise über 400°C oder auch über 600°C. Ein solcher Garraum ist somit für Selbstreinigungsprozesse, wie eine Pyrolyse, geeignet. Des Weiteren ist der Garraum über eine öffenbare und schließbare Tür beschickbar, welche in eine der Seitenwände eingefügt ist.

Ein Luftleitblech ist ein flacher Körper, gebildet aus einem hitzebeständigen Material, welcher dazu eingerichtet ist, eine Luftströmung innerhalb des Garraums in gewünschter Weise zu leiten. Hitzebeständig bedeutet, dass das Material sehr hohen Temperaturen widerstehen kann. Zur Luftleitung kann das Luftleitblech Öffnungen, wie Löcher und/oder Schlitze, aufweisen, durch welche Luft strömen kann. Außerdem kann das Luftleitblech von einer flachen Form zumindest stellenweise abweichen und zum Beispiel Wölbungen umfassen. Insbesondere kann das Luftleitblech an den Kanten abgebogen sein. Das Luftleitblech ist darüber hinaus mittels zumindest einer Halterung an zumindest einer Seitenwand des Garraums fixiert, wodurch die Lage des Luftleitblechs in dem Garraum festgelegt ist. Eine Halterung kann beispielsweise eine Schraube, ein Nagel, ein Nippel, ein Haltebügel und/oder weitere Objekte sowie Kombinationen hiervon umfassen, welche dazu geeignet sind, das Luftleitblech in Bezug auf den Garraum zu fixieren.

Das Luftleitblech erstreckt sich vorteilhafterweise über einen größeren Bereich einer Seitenwand und ist parallel zu dieser, oder zumindest nur mit einem kleinen Winkel zu dieser, angeordnet. Ein größerer Bereich bedeutet beispielsweise, dass die Fläche der von dem Luftleitblech überdeckten Seitenwand zumindest 25%, bis zu 50% oder auch bis zu 100% der Fläche der Seitenwand beträgt. Ein kleiner Winkel im Sinne der Anordnung bedeutet beispielsweise weniger als 10°, weniger als 20° oder auch weniger als 45°.

Eine Sende/Empfangseinheit ist eine analoge und/oder digitale Schaltung, welche dazu eingerichtet ist, ein analoges und/oder digitales Signal zu generieren und zu senden, beziehungsweise zu empfangen und zu filtern. Eine Sendeeinheit wird auch als Transponder bezeichnet. Eine Empfangseinheit wird auch als Receiver bezeichnet. Eine Sende/Empfangseinheit wird auch als Transceiver bezeichnet.

Ein Hochfrequenzsignal ist insbesondere eine elektrische Wechselspannung, welche eine hohe Wechselfrequenz aufweist. Bevorzugt liegt die Frequenz des Hochfrequenzsignals in einem ISM-Band, besonders bevorzugt zwischen 433,05 - 434,79 MHz.

Eine Koppelvorrichtung ist eine Vorrichtung, welche dazu eingerichtet ist, einen Eingang und/oder einen Ausgang der Sende/Empfangseinheit mit einem weiteren Bauteil, zum Beispiel dem Luftleitblech, so zu verbinden, dass die Übertragung eines elektrischen Signals, insbesondere des Hochfrequenzsignals, ermöglicht ist. Dies ist beispielsweise ein elektrischer Leiter, wie ein Kabel, insbesondere ein Koaxialkabel.

Eine Flächenantenne ist ein flaches Bauteil, welches zur Abstrahlung und/oder zum Empfang von elektromagnetischer Strahlung geeignet ist. Eine Flächenantenne kann auch als Flächenstrahler bezeichnet werden. Beispielsweise eine Patchantenne ist eine Ausführungsform einer Flächenantenne. Insbesondere ist das als Flächenantenne ausgebildete Luftleitblech dazu geeignet, das Hochfrequenzsignal zu empfangen und/oder abzustrahlen.

In vorteilhafter Weise ist das als Flächenantenne ausgebildete Luftleitblech z.B. an der der Tür des Garraums gegenüberliegenden Seitenwand in vertikaler Weise angeordnet. Dies hat den Vorteil, dass das Hochfrequenzsignal von der Flächenantenne auch dann empfangbar ist, wenn sich beispielsweise Träger für Nahrungsmittel und/oder Nahrungsmittel in dem Garraum befinden, die das Hochfrequenzsignal absorbieren.

Ein Sensor, insbesondere ein Temperatursensor, umfasst eine Messeinheit, insbesondere einen Temperaturfühler, sowie eine elektrische Schaltung, um die Messeinheit anzusteuern und/oder auszulesen. Auslesen bedeutet hierbei, dass ein Messwert durch die elektrische Schaltung mittels der Messeinheit ermittelt wird. Darüber hinaus umfasst der Sensor Ein- und Ausgabemittel, um eine kabellose Kommunikationsverbindung mit einer weiteren Einheit aufbauen zu können. Diese weitere Einheit ist insbesondere die Sende/Empfangseinheit. Der Sensor kann auch dazu ausgebildet sein, weitere für das Garen relevante Parameter, wie zum Beispiel eine Luftfeuchtigkeit, eine Sauerstoffkonzentration, und/oder eine elektrische Feldstärke zu erfassen. Ein derartiger Sensor hat den Vorteil, dass ein Garvorgang kontrolliert werden kann und auch ein Endpunkt des Garvorgangs automatisch bestimmt werden kann. Der Endpunkt ist z.B. erreicht, wenn die Kerntemperatur des zuzubereitenden Nahrungsmittels eine vorgegebene Temperatur erreicht und/oder überschreitet.

Darüber hinaus kann der Sensor auch eine Energiequelle zum Betrieb des Sensors umfassen. Diese Energiequelle kann beispielweise eine Batterie sein. Alternativ kann der Sensor die zu seinem Betrieb benötigte Energie auch aus einer in dem Garraum vorliegenden thermischen Energie und/oder aus einem elektromagnetischen Feld beziehen. Diese Bauform ist vorteilhaft, da es hiermit vermieden wird, dass ein Benutzer die Energieversorgung des Sensors überwachen muss. Außerdem sind viele Energiequellen, wie Batterien, nicht für den Betrieb bei hohen oder sehr hohen Temperaturen ausgelegt und/oder sie enthalten giftige Stoffe, die bei einem Defekt in ein Nahrungsmittel übertreten können, was hierdurch vermieden wird.

Erfindungsgemäß umfasst die Koppelvorrichtung eine spiralförmige elektrische Leitung zur kapazitiven Kopplung mit dem Luftleitblech zur Übertragung des Hochfrequenzsignals.

Hiermit wird vorteilhafterweise eine effiziente Signalkopplung gewährleistet, wobei zugleich hohe niederfrequente Ströme unterdrückt werden. Unter spiralförmig ist zu verstehen, dass die elektrische Leitung eine gebogene Ausformung aufweist.

Besonders vorteilhaft ist es, wenn die elektrische Leitung eine größere Fläche über dem Luftleitblech überdeckt. Eine größere Fläche bedeutet, dass beispielsweise eine Projektion der spiralförmigen elektrischen Leitung in normaler Richtung auf das Luftleitblech eine größere Fläche überdeckt als eine Projektion einer elektrischen Leitung ohne Spiralform.

Eine elektrische Leitung ist ein elektrisch leitendes Material, welches zur Übertragung des Hochfrequenzsignals geeignet ist. Dies ist insbesondere ein Koaxialkabel. Ein Koaxialkabel umfasst zumindest eine Seele und eine Abschirmung.

Gemäß einer weiteren Ausführungsform des Gargeräts ist die spiralförmige elektrische Leitung hinter, vor, über, unter und/oder seitlich relativ zu dem Luftleitblech angeordnet.

Dies hat den Vorteil, dass die spiralförmige elektrische Leitung relativ zu dem Luftleitblech derart angeordnet werden kann, dass weitere bauliche Bedingungen erfüllt werden können. Dies betrifft insbesondere die räumliche Anordnung von weiteren Bauteilen. Zudem kann hierdurch eine effiziente Kopplung des Luftleitblechs mit der Sende/Empfangseinheit sichergestellt werden.

Darüber hinaus ist es auch denkbar, dass die Koppelvorrichtung zwei oder mehr spiralförmige elektrische Leitungen umfasst, welche dann relativ zu dem Luftleitblech derart angeordnet werden können, dass eine effiziente Kopplung des Luftleitblechs mit der Sende/Empfangseinheit erreicht wird. Dies kann einerseits die Effizienz einer Signalübertragung verbessern, andererseits kann eine derartige doppelte Ausführung auch eine Redundanz der Koppelvorrichtung bedingen, was eine Ausfallsicherheit für das System bewirkt.

Gemäß einer weiteren Ausführungsform des Gargeräts ist eine Position der spiralförmigen elektrischen Leitung relativ zu dem Luftleitblech in Abhängigkeit der Lage der zumindest einen Halterung des Luftleitblechs und/oder in Abhängigkeit eines Abstandes eines Randes des Luftleitblechs von der Seitenwand derart, dass eine Impedanz des Luftleitblechs an eine Impedanz der Koppelvorrichtung angepasst ist.

Eine derartige Impedanzanpassung ist vorteilhaft, um eine effiziente Kopplung des Hochfrequenzsignals zu gewährleisten und somit ein Senden und/oder Empfangen des Hochfrequenzsignals zu erzielen.

Gemäß einer weiteren Ausführungsform des Gargeräts ist die spiralförmige elektrische Leitung als ein entnehmbares und/oder hinzufügbares Bauteil ausgebildet.

Unter entnehmbar wird hierbei verstanden, dass das Bauteil aus einem in dem Gargerät eingebauten Zustand in einen von dem Gargerät losgelösten Zustand überführt werden kann. Unter hinzufügbar wird hierbei verstanden, dass das Bauteil von dem von dem Gargerät losgelösten Zustand in den in dem Gargerät eingebauten Zustand überführt werden kann. Dies hat den Vorteil, dass eine defekte spiralförmige elektrische Leitung durch eine intakte spiralförmige elektrische Leitung ersetzt werden kann, ohne dass das Gargerät als Ganzes zerlegt werden muss. Darüber hinaus kann das Bauteil auch nachgerüstet werden.

Gemäß einer weiteren Ausführungsform des Gargeräts weist das Luftleitblech eine für das Hindurchführen des Bauteils eingerichtete Öffnung auf.

Dies hat den Vorteil, dass ein Entnehmen beziehungsweise ein Hinzufügen der spiralförmigen elektrischen Leitung erfolgen kann, ohne dass das Luftleitblech selbst ausgebaut werden muss. Unter Hindurchführen wird hierbei verstanden, dass das Bauteil von einer ersten Seite durch die Öffnung auf eine zweite Seite des Luftleitblechs gebracht wird. Eine hierfür eingerichtete Öffnung kann beispielsweise ein Loch und/oder einen Schlitz umfassen.

Gemäß einer weiteren Ausführungsform des Gargeräts ist die spiralförmige elektrische Leitung aus einem hitzebeständigen Federmaterial gefertigt.

Dies hat insbesondere den Vorteil, dass ein Abstand zwischen dem Luftleitblech und der spiralförmigen elektrischen Leitung konstant gehalten werden kann, ohne dass die spiralförmige elektrische Leitung fest mit dem Luftleitblech verbunden werden muss. Aufgrund der Federeigenschaften des Federmaterials ist hiermit eine gewisse Toleranz in der relativen Positionierung des Luftleitblechs und der spiralförmigen elektrischen Leitung gegeben, insbesondere in Bezug auf einen Abstand des Luftleitblechs von der Koppelvorrichtung.

Gemäß einer weiteren Ausführungsform des Gargeräts ist das Luftleitblech aus einem Stahlblech gefertigt, welches mit einer elektrisch isolierenden Schicht beschichtet ist.

Dies gewährleistet insbesondere, dass ein Gleichstrom zwischen der Sende/Empfangseinheit, welche mittels der Koppelvorrichtung mit dem Luftleitblech gekoppelt ist, und dem Luftleitblech unterdrückt wird. Aufgrund der kapazitiven Kopplung ist eine Übertragung des Hochfrequenzsignals dennoch ermöglicht.

Gemäß einer weiteren Ausführungsform des Gargeräts ist das Luftleitblech emailliert.

Gemäß einer weiteren Ausführungsform des Gargeräts ist eine Masse für die Flächenantenne mittels einer Masseleitung galvanisch mit zumindest einer Seitenwand des Garraums gekoppelt.

Die Masseleitung ist insbesondere durch die Abschirmung eines Koaxialkabels gegeben. Die galvanische Kopplung wird beispielsweise durch direkte Verschraubung der Abschirmung mit der Seitenwand erzielt. Alternativ kann die Masseleitung auch mit der Seitenwand verschweißt, aufgelötet oder anderweitig mit der Seitenwand verbunden sein. Hierdurch ist vorteilhaferweise sichergestellt, dass die Bezugsmasse des Hochfrequenzsignals ein Potential aufweist, das mit einem Potential der Seitenwand übereinstimmt. Bevorzugt sind alle Seitenwände des Garraums leitend miteinander in Kontakt, so dass alle Seitenwände das gleiche Potential aufweisen.

Gemäß einer weiteren Ausführungsform des Gargeräts ist die Flächenantenne für die Übertragung des Hochfrequenzsignals in einem ISM-Band ausgebildet.

Das ISM-Band umfasst Frequenzen im Bereich um 434 MHz, insbesondere 433,05 - 434,79 MHz. Hiermit wird eine Nutzung der Anordnung auf Grundlage einer Allgemeinzuteilung rechtlich ermöglicht.

Gemäß einer weiteren Ausführungsform des Gargeräts ist die Sende/Empfangseinheit zum Übertragen eines ersten Hochfrequenzsignals mittels der Flächenantenne auf den Sensor zu vorgebbaren Zeitpunkten und/oder in Abhängigkeit eines Vorliegens eines Auslösesignals eingerichtet. Alternativ oder zusätzlich ist die Flächenantenne zum Empfangen eines von dem Sensor ausgegebenen zweiten Hochfrequenzsignals mittels der Flächenantenne zu vorgebbaren Zeitpunkten und/oder in Abhängigkeit eines Vorliegens eines Auslösesignals eingerichtet.

Hiermit kann vorteilhafterweise sichergestellt werden, dass ein Sensorsignal aktuell vorliegt. Vorgebbare Zeitpunkte können beispielsweise nach Beginn eines Garens in Ein-Minuten-Abständen, in Fünf-Minuten-Abständen oder auch nach zehn Minuten definiert werden. Weitere vorgebbare Zeitpunkte können auch beliebig mittels analytischer Funktionen, rekursiven Folgen, Wertetabellen und/oder Kombinationen hiervon ermittelt werden. Dann ist die Sende/Empfangseinheit beispielsweise auch dazu eingerichtet, die vorgebbaren Zeitpunkte zu ermitteln. Die Zeitpunkte können Einzelzeitpunkte, periodisch oder anderweitig regel- oder unregelmäßig wiederkehrende Zeitpunkte sein. Das Auslösesignal umfasst insbesondere ein durch einen Benutzer getätigtes Signal. Das Auslösesignal kann aber auch durch Erreichen einer bestimmten Temperatur in dem Garraum gegeben sein. Insbesondere kann das Auslösesignal auch von dem Sensor selbst generiert werden.

Gemäß einer weiteren Ausführungsform umfasst das Gargerät eine Heizspirale, einen Dampferzeuger, einen Mikrowellengenerator und/oder einen Ventilator.

Gemäß einer weiteren Ausführungsform ist das Gargerät als ein Backofen, ein Mikrowellenherd und/oder ein Dampfgarer ausgebildet.

Außerdem wird ein Verfahren zum Betreiben eines Gargeräts mit einem Garraum zum Garen von Gargut und einem in dem Garraum angeordneten und als Flächenantenne ausgebildeten Luftleitblech, einer Sende/Empfangseinheit zum Senden und/oder Empfangen eines Hochfrequenzsignals, und einer Koppelvorrichtung zum Koppeln der Sende/Empfangseinheit und des Luftleitblechs, und einem in dem Garraum angeordneten Sensor vorgeschlagen, mit: Übertragen des Hochfrequenzsignals zwischen der Sende/Empfangseinheit und dem Sensor mittels der Flächenantenne.

Die für das vorgeschlagene Gargerät beschriebenen Ausführungsformen und Merkmale gelten für das vorgeschlagene Verfahren entsprechend.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild einer Ausführungsform eines Gargeräts;
- Fig. 2: zeigt ein schematisches Blockschaltbild einer Ausführungsform einer Koppelvorrichtung;
- Fig. 3: zeigt ein schematisches Blockschaltbild einer weiteren Ausführungsform eines Gargeräts;
- Fig. 4: zeigt ein Zeitdiagramm als ein Beispiel eines Vorliegens eines Auslösesignals;
- Fig. 5: zeigt ein schematisches Blockschaltbild einer weiteren Ausführungsform eines Gargeräts;
- Fig. 6: zeigt ein schematisches Blockschaltbild einer weiteren Ausführungsform eines Gargeräts;
- Fig. 7: zeigt ein schematisches Blockschaltbild einer Frontansicht einer weiteren Ausführungsform eines Gargeräts; und
- Fig. 8: zeigt ein Ablaufdiagramm eines Verfahrens zum Betreiben eines Gargeräts.

In den Figuren sind gleiche oder funktionsgleiche Elemente mit denselben Bezugszeichen versehen worden, sofern nichts anderes angegeben ist.

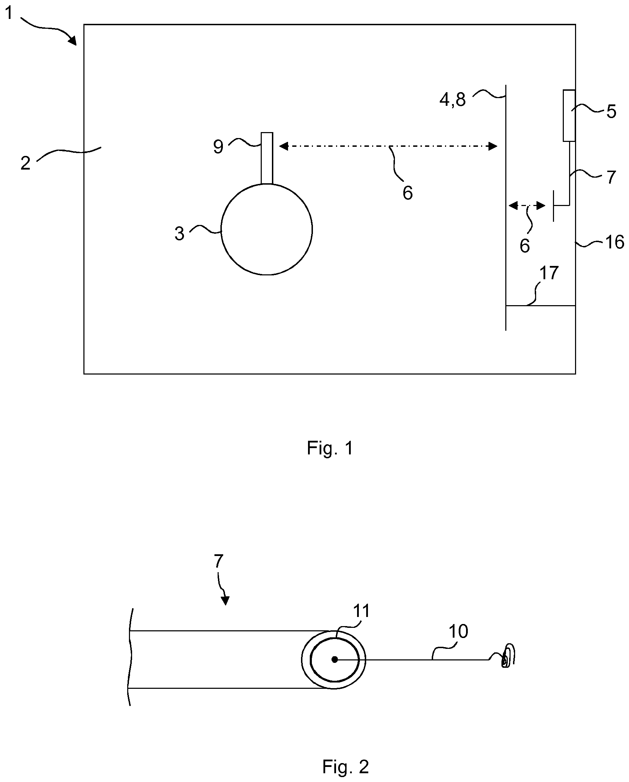

Fig. 1 zeigt ein schematisches Blockschaltbild einer Ausführungsform eines Gargeräts 1. Das dargestellte Gargerät 1 umfasst einen Garraum 2, in welchem sich ein Gargut 3 befindet. In dem Gargut 3 ist ein Sensor 9 fixiert. Ferner umfasst das Gargerät 1 eine Sende/Empfangseinheit 5, eine Koppelvorrichtung 7, sowie ein Luftleitblech 4, welches mittels einer Halterung 17 an einer Seitenwand 16 des Garraums 2 fixiert ist.

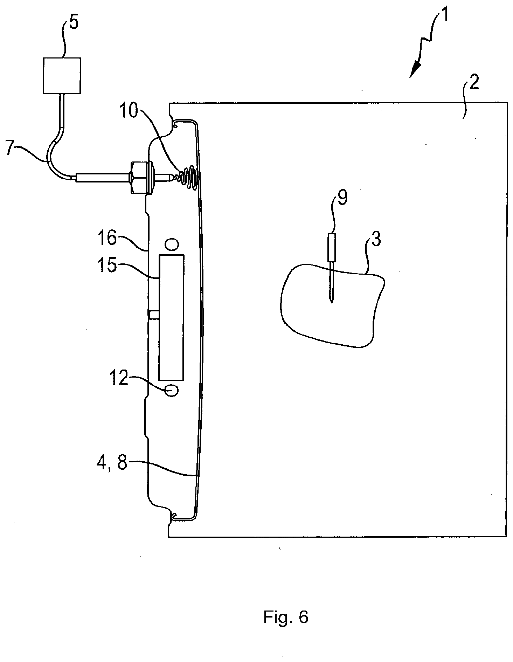

In dem Ausführungsbeispiel der Fig. 1 wird beispielsweise ein Hochfrequenzsignal 6 in der Sende/Empfangseinheit 5 generiert. Das Hochfrequenzsignal 6 wird mittels der Koppelvorrichtung 7 von der Sende/Empfangseinheit 5 auf das Luftleitblech 4 übertragen. Die Koppelvorrichtung 7 weist eine kapazitive Kopplung mit dem Luftleitblech 4 auf, was in der Darstellung der Fig. 1 durch einen Spalt zwischen der Koppelvorrichtung 7 und dem Luftleitblech 4 dargestellt ist. Das Hochfrequenzsignal 6 ist mittels eines mit einer gestrichelten Linie verbundenen Doppelpfeils dargestellt. Das Luftleitblech 4 ist in dem Ausführungsbeispiel als Flächenantenne 8 eingerichtet. Die Flächenantenne 8 ist dazu geeignet, das Hochfrequenzsignal 6 in den Garraum 2 abzustrahlen. Das Hochfrequenzsignal 6 kann somit auf den in dem Gargut 3 fixierten Sensor 9 übertragen werden. Beispielsweise empfängt der Sensor 9 das Hochfrequenzsignal 6 und generiert seinerseits ein weiteres Hochfrequenzsignal 6, welches von der Flächenantenne 8 empfangen und mittels der kapazitiven Kopplung an die Koppelvorrichtung 7 und weiter an die Sende/Empfangseinheit 5 übertragen werden kann. Die Sende/Empfangseinheit 5 ist dazu eingerichtet, das empfangene weitere Hochfrequenzsignal 6 zu interpretieren. Der Sensor 9 ist beispielsweise ein Temperaturspieß, wobei dann das Hochfrequenzsignal 6 dazu eingerichtet ist, eine Temperaturinformation zu übertragen. Das Hochfrequenzsignal 6 befindet sich insbesondere in einem Frequenzbereich von 433,05 - 434,79 MHz. Abweichend von der Darstellung der Fig. 1 kann die Sende/Empfangseinheit 5 auch außerhalb des Garraums 2 angeordnet werden (siehe z.B. Fig. 6). Dann kann die Koppelvorrichtung 7 durch eine dafür vorgesehene Öffnung in der Seitenwand 16 geführt werden.

Fig. 2 zeigt ein schematisches Blockschaltbild einer Ausführungsform der erfindungsgemäßen Koppelvorrichtung 7, welche als eine spiralförmige elektrische Leitung 10 ausgebildet ist. In dem Beispiel der Fig. 2 ist die Koppelvorrichtung 7 als ein Koaxialkabel 7 dargestellt. Das Koaxialkabel 7 umfasst insbesondere eine Seele 10 sowie eine Abschirmung 11. Sowohl die Seele 10 als auch die Abschirmung 11 sind aus elektrisch leitfähigen Materialien hergestellt.

In der Fig. 2 ist die Seele 10 des Koaxialkabels 7 als die spiralförmige elektrische Leitung 10 ausgebildet. Hierzu ist ein Ende der spiralförmigen elektrischen Leitung 10 spiralförmig gebogen. Diese Anordnung hat den Vorteil, dass das Hochfrequenzsignal 6 besonders effizient kapazitiv übertragen werden kann, da eine große Fläche des Luftleitblechs 4 überdeckt wird, womit die Wechselwirkung zwischen der elektrischen Leitung 10 und dem Luftleitblech 4 verstärkt wird. Die Abschirmung 11 wird bevorzugt mit einer Masse, besonders bevorzugt mit der Seitenwand 16 des Garraums 2, galvanisch gekoppelt (nicht dargestellt). Eine solche galvanische Kopplung kann beispielsweise mittels einer direkten Verschraubung der Abschirmung 11 mit der Seitenwand 16 erzielt werden.

Zwischen der Seele 10 und der Abschirmung 11 befindet sich vorzugsweise ein geeignetes Dielektrikum, um einen Kurzschluss zu vermeiden. Weiterhin ist die Abschirmung 11 bevorzugt von einer isolierenden Schicht umgeben, um Fehlkontakte zu vermeiden.

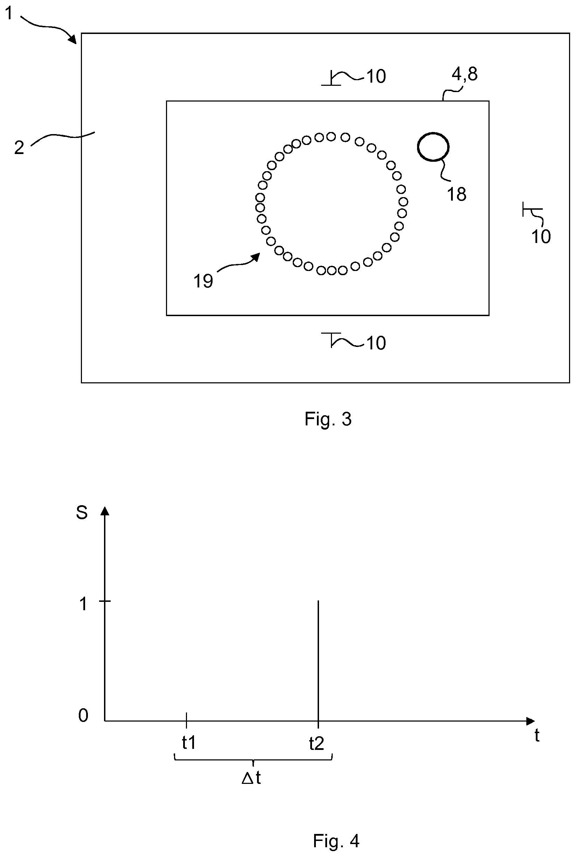

Fig. 3 zeigt ein schematisches Blockschaltbild einer weiteren Ausführungsform eines Gargeräts 1, umfassend einen Garraum 2, ein Luftleitblech 4 sowie mehrere spiralförmige elektrische Leitungen 10. Die Mehrzahl der spiralförmigen elektrischen Leitungen 10 bildet insgesamt die Koppelvorrichtung 7 (nicht dargestellt). Das als Flächenantenne 8 ausgebildete Luftleitblech 4 der Fig. 3 umfasst weiterhin eine Öffnung 18, welche zum Hindurchführen eines Bauteils eingerichtet ist, sowie eine Mehrzahl an Luftöffnungen 19. In dem Beispiel der Fig. 3 ist die Mehrzahl der Luftöffnungen 19 in einem Kreis angeordnet.

Durch die Verwendung von mehreren spiralförmigen elektrischen Leitungen 10 kann eine optimierte Übertragung des Hochfrequenzsignals 6 auf das Luftleitblech 4 erzielt werden. Hierbei kann die Anordnung der spiralförmigen elektrischen Leitungen 10 beliebig gewählt werden. Insbesondere kann die Anordnung der spiralförmigen elektrischen Leitungen 10 derart gewählt werden, dass weitere bauliche Bedingungen des Gargeräts 1 erfüllt werden können. In dem Beispiel der Fig. 3 befinden sich jeweils eine spiralförmige elektrische Leitung 10 unter, über, sowie rechts von dem Luftleitblech 4. Es ist aber auch denkbar, dass mehrere der spiralförmigen elektrischen Leitungen 10 über, unter, vor, hinter und/oder seitlich neben dem Luftleitblech 4 angeordnet werden. Außerdem ist denkbar, dass sich einzelne spiralförmige elektrische Leitungen 10 voneinander unterscheiden. Ein solcher Unterschied könnte beispielsweise in der Ausführung der Spiralform liegen.

Die Öffnung 18 des Luftleitblechs 4 der Fig. 3 ist insbesondere dazu geeignet, dass eine als ein separates Bauteil ausgeführte spiralförmige elektrische Leitung 10 durch diese hindurchführbar ist. Dann ist eine hinter dem Luftleitblech 4 in einer dafür vorgesehenen Aufnahme (nicht dargestellt) montierte spiralförmige elektrische Leitung 10 durch das Luftleitblech 4 von vorne zugänglich und kann dem Gargerät 1 entnommen werden oder alternativ hinzugefügt werden.

Weiterhin sind die Luftöffnungen 19 insbesondere dazu geeignet, einen Luftstrom in dem Garraum 2 zu lenken. Außerdem können die Luftöffnungen 19 dazu geeignet sein, die physikalischen Eigenschaften des als Flächenantenne 8 ausgebildeten Luftleitblechs 4 derart zu beeinflussen, dass die Übertragungseigenschaften der Flächenantenne 8 optimiert sind.

Fig. 4 zeigt ein Zeitdiagramm als ein Beispiel eines Vorliegens eines Auslösesignals. Die Fig. 4 zeigt ein Diagramm mit einer Zeitachse t und einer Signalachse S. Die Signalachse S ist dabei als ein Binärsystem mit den Werten 0 und 1 dargestellt. In der Darstellung der Fig. 4 wird beispielsweise zu einem Zeitpunkt t1 mit einer Messung begonnen. Die Messung soll derart erfolgen, dass nach Ablauf eines Zeitraums Δt = t2 - t1 der Sensor 9 ausgelesen wird. Nach Ablauf des Zeitraums Δt, zu dem Zeitpunkt t2, liegt deshalb das Auslösesignal vor. Dies ist in der Fig. 4 als ein Signalpegel 1 auf der Signalachse S dargestellt. Das Auslösesignal veranlasst die Sende/Empfangseinrichtung 5 dazu, das Hochfrequenzsignal 6 zu generieren, um den Sensor 9 auszulesen.

Alternativ zu dieser Darstellung sind viele weitere Folgen von Auslösesignalen denkbar, beispielsweise periodisch auftretende Auslösesignale oder durch ein weiteres Ereignis, z.B. das Betätigen eines dafür vorgesehenen Bedienelements durch einen Benutzer, ausgelöste Auslösesignale. Bei einer periodischen Abfolge von Auslösesignalen umfasst ein Zeitraum Δt zwischen zwei aufeinander folgenden Auslösesignalen bevorzugt eine Dauer im Bereich von Sekunden, d.h. 0,5s, 1s, oder auch 10s.

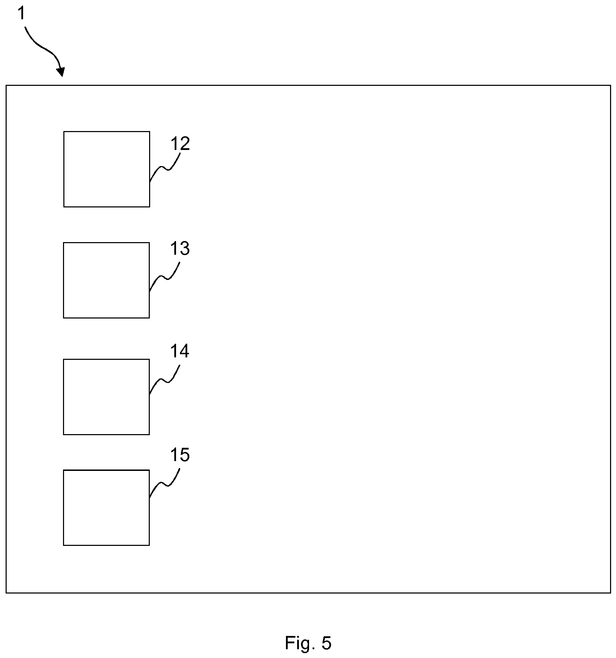

Fig. 5 zeigt ein schematisches Blockschaltbild einer weiteren Ausführungsform eines Gargeräts 1. In dem Beispiel der Fig. 5 umfasst das Gargerät 1 zusätzlich zu den in den Fig. 1, 3, 6 und/oder 7 dargestellten Vorrichtungen eine Heizspirale 12, einen Dampferzeuger 13, einen Mikrowellengenerator 14 sowie ein Ventilator 15.

Fig. 6 zeigt ein schematisches Blockschaltbild einer weiteren Ausführungsform eines Gargeräts 1. Das Gargerät 1 ist in einer Seitenansicht dargestellt. Das Gargerät 1 umfasst einen Garraum 2 mit einem darin befindlichen Gargut 3. In dem Gargut 3 ist ein Sensor 9 fixiert. Weiterhin umfasst das Gargerät 1 eine Sende/Empfangseinheit 5, eine Kopplungsvorrichtung 7 mit einer spiralförmigen elektrischen Leitung 10, ein als Flächenantenne 8 ausgebildetes Luftleitblech 4, welches parallel zu der Seitenwand 16 angeordnet ist. Ferner umfasst das Gargerät 1 eine Heizspirale 12 sowie einen Ventilator 15. Insbesondere ist in dem Ausführungsbeispiel der Fig. 6 die Sende/Empfangseinheit 5 außerhalb des Garraums 2 angeordnet. Die Koppelvorrichtung 7 wird zur Kopplung des Luftleitblechs 4 mit der Sende/Empfangseinheit 5 durch eine hierfür eingerichtete Öffnung in der Seitenwand 16 geführt.

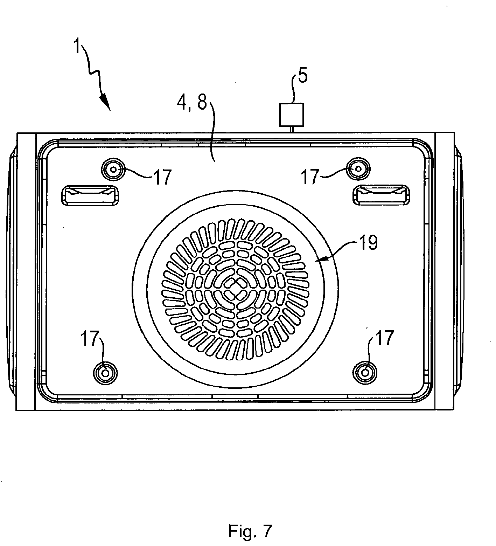

Fig. 7 zeigt ein schematisches Blockschaltbild einer Frontansicht einer weiteren Ausführungsform eines Gargeräts 1. In dem Beispiel ist die Sende/Empfangseinheit 5 außerhalb des Garraums 2 angeordnet. Die weiteren funktionalen Elemente wie die Koppelvorrichtung 7 mit elektrischer Leitung 10 werden von dem Luftleitblech 4 überdeckt und sind deshalb in der Fig. 7 nicht dargestellt. Das als Flächenantenne 8 ausgebildete Luftleitblech 4 weist in dem Beispiel eine Mehrzahl an Luftöffnungen 19 auf. Außerdem sind vier Halterungen 17 dargestellt, mittels welchen das Luftleitblech 4 an einer Seitenwand 16 fixiert ist.

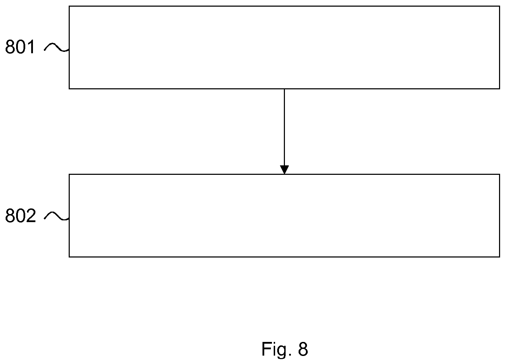

Fig. 8 zeigt ein Ablaufdiagramm eines Verfahrens zum Betreiben des Gargeräts 1, insbesondere nach einer der Ausführungsformen der Fig. 1, 3 oder 5 - 7. Das Gargerät 1 umfasst einen Garraum 2 zum Garen von Gargut 3, ein in dem Garraum 2 angeordnetes und als Flächenantenne 8 ausgebildetes Luftleitblech 4, eine Sende/Empfangseinheit 5 zum Senden und/oder Empfangen eines Hochfrequenzsignals 6 und eine Koppelvorrichtung 7 zum Koppeln der Sende/Empfangseinheit 5 und des Luftleitblechs 4, sowie einen in dem Garraum 2 angeordneten Sensor 9.

In Schritt 801 wird das Hochfrequenzsignal 6 zwischen der Sende/Empfangseinheit 5 und dem Sensor 9 mittels der Flächenantenne 8 übertragen.

In Schritt 802 wird das übertragene Hochfrequenzsignal 6 von der Sende/Empfangseinheit 5 interpretiert.

Der Schritt 802 ist hierbei optional, da die Sende/Empfangseinheit 5 das empfangene Hochfrequenzsignal 6 zum Beispiel auch an eine Steuervorrichtung des Gargeräts 1 weiterleiten kann, welches dann die Interpretation des Hochfrequenzsignals 6 übernimmt.

Obwohl die vorliegende Erfindung anhand von Ausführungsbeispielen beschrieben wurde, ist sie vielfältig modifizierbar.

### Verwendete Bezugszeichen

- 1: Gargerät
- 2: Garraum
- 3: Gargut
- 4: Luftleitblech
- 5: Sende/Empfangseinheit
- 6: Hochfrequenzsignal
- 7: Koppelvorrichtung
- 8: Flächenantenne
- 9: Sensor
- 10: elektrische Leitung
- 11: Abschirmung
- 12: Heizspirale
- 13: Dampferzeuger
- 14: Mikrowellengenerator
- 15: Ventilator
- 16: Seitenwand
- 17: Halterung
- 18: Öffnung
- 19: Luftöffnungen

- 801: Verfahrensschritt
- 802: Verfahrensschritt

- t: Zeitachse
- t1: Zeitpunkt
- t2: Zeitpunkt
- Δt: Zeitraum
- S: Signalachse

## Patentansprüche

1. Gargerät (1) mit einem Garraum (2) zum Garen von Gargut (3), mit einem in dem Garraum (2) angeordneten Luftleitblech (4), einer Sende/Empfangseinheit (5) zum Senden und/oder Empfangen eines Hochfrequenzsignals (6), und einer Koppelvorrichtung (7) zum Koppeln der Sende/Empfangseinheit (5) und des Luftleitblechs (4), wobei das Luftleitblech (4) als eine Flächenantenne (8) zur Übertragung des Hochfrequenzsignals (6) zwischen der Koppelvorrichtung (7) und einem in dem Garraum (2) anordenbaren Sensor (9) ausgebildet ist, **dadurch gekennzeichnet, dass** die Koppelvorrichtung (7) eine spiralförmige elektrische Leitung (10) zur kapazitiven Kopplung mit dem Luftleitblech (4) zur Übertragung des Hochfrequenzsignals (6) umfasst.

2. Gargerät (1) nach Anspruch 1, **dadurch gekennzeichnet, dass** die spiralförmige elektrische Leitung (10) hinter, vor, über, unter und/oder seitlich relativ zu dem Luftleitblech (4) angeordnet ist.

3. Gargerät (1) nach Anspruch 1 oder 2, **dadurch gekennzeichnet, dass** eine Position der spiralförmigen elektrischen Leitung (10) relativ zu dem Luftleitblech (4) in Abhängigkeit der Lage einer Halterung (17) des Luftleitblechs (4), welche das Luftleitblech (4) an zumindest einer Seitenwand (16) des Garraums (2) fixiert, und/oder in Abhängigkeit eines Abstandes eines Randes des Luftleitblechs (4) von einer Seitenwand (16) derart ist, dass eine Impedanz des Luftleitblechs (4) an eine Impedanz der Koppelvorrichtung (7) angepasst ist.

4. Gargerät (1) nach einem der Ansprüche 1 - 3, **dadurch gekennzeichnet, dass** die spiralförmige elektrische Leitung (10) als ein entnehmbares und/oder hinzufügbares Bauteil ausgebildet ist.

5. Gargerät (1) nach Anspruch 4, **dadurch gekennzeichnet, dass** das Luftleitblech (4) eine für das Hindurchführen des Bauteils eingerichtete Öffnung (18) aufweist.

6. Gargerät (1) nach einem der Ansprüche 1 - 5, **dadurch gekennzeichnet, dass** die spiralförmige elektrische Leitung (10) aus einem hitzebeständigen Federmaterial gefertigt ist.

7. Gargerät (1) nach einem der Ansprüche 1 - 6, **dadurch gekennzeichnet, dass** das Luftleitblech (4) aus einem Stahlblech gefertigt ist, welches mit einer elektrisch isolierenden Schicht beschichtet ist.

8. Gargerät (1) nach einem der Ansprüche 1 - 7, **dadurch gekennzeichnet, dass** das Luftleitblech (4) emailliert ist.

9. Gargerät (1) nach einem der Ansprüche 1 - 8, **dadurch gekennzeichnet, dass** eine Masse für die Flächenantenne (8) mittels einer Masseleitung galvanisch mit einer Seitenwand (16) des Garraums (2) gekoppelt ist.

10. Gargerät (1) nach einem der Ansprüche 1 - 9, **dadurch gekennzeichnet, dass** die Flächenantenne (8) für die Übertragung des Hochfrequenzsignals (6) in einem ISM-Band ausgebildet ist.

11. Gargerät (1) nach einem der Ansprüche 1 - 10, **dadurch gekennzeichnet, dass** die Sende/Empfangseinheit (5) zum Übertragen eines ersten Hochfrequenzsignals (6) mittels der Flächenantenne (8) auf den Sensor (9) und/oder zum Empfangen eines von dem Sensor (9) bereitgestellten zweiten Hochfrequenzsignals (6) mittels der Flächenantenne (8) zu vorgebbaren Zeitpunkten und/oder in Abhängigkeit eines Vorliegens eines Auslösesignals eingerichtet ist.

12. Gargerät (1) nach einem der Ansprüche 1 - 11, **dadurch gekennzeichnet, dass** das Gargerät (1) eine Heizspirale (12), einen Dampferzeuger (13), einen Mikrowellengenerator (14) und/oder einen Ventilator (15) umfasst.

13. Gargerät (1) nach einem der Ansprüche 1 - 12, wobei das Gargerät (1) als ein Backofen, ein Mikrowellenherd und/oder ein Dampfgarer ausgebildet ist.

14. Verfahren zum Betreiben eines Gargeräts (1) mit einem Garraum (2) zum Garen von Gargut (3) gemäß einem der Ansprüche 1-13, mit einem in dem Garraum (2) angeordneten und als Flächenantenne (8) ausgebildeten Luftleitblech (4), einer Sende/Empfangseinheit (5) zum Senden und/oder Empfangen eines Hochfrequenzsignals (6), und einer Koppelvorrichtung (7) zum Koppeln der Sende/Empfangseinheit (5) und des Luftleitblechs (4), wobei die Koppelvorrichtung (7) eine spiralförmige elektrische Leitung (10) zur kapazitiven Kopplung mit dem Luftleitblech (4) zur Übertragung des Hochfrequenzsignals (6) umfasst, und einem in dem Garraum (2) angeordneten Sensor (9), mit:
Übertragen (801) des Hochfrequenzsignals (6) zwischen der Sende/Empfangseinheit (5) und dem Sensor (9) mittels der Flächenantenne (8).

## Claims

1. Cooking appliance (1) having a cooking chamber (2) for cooking a product (3) to be cooked, having an air-guiding plate (4) arranged in the cooking chamber (2), a transmitter/receiver unit (5) for transmitting and/or receiving a high-frequency signal (6) and a coupling device (7) for coupling the transmitter/receiver unit (5) and the air-guiding plate (4), wherein the air-guiding plate (4) is in the form of a planar antenna (8) for transmitting the high-frequency signal (6) between the coupling device (7) and a sensor (9) that can be arranged in the cooking chamber (2), **characterised in that** the coupling device (7) comprises a spiral-shaped electrical line (10) for capacitive coupling with the air-guiding plate (4) for transmitting the high-frequency signal (6).

2. Cooking appliance (1) according to claim 1, **characterised in that** the spiral-shaped electrical line (10) is arranged to the rear, to the front, above, below and/or to the side relative to the air-guiding plate (4).

3. Cooking appliance (1) according to claim 1 or 2, **characterised in that** a position of the spiral-shaped electrical line (10) relative to the air-guiding plate (4) is dependent on the position of a mounting (17) of the air-guiding plate (4), which fixes the air-guiding plate (4) to at least one side wall (16) of the cooking chamber (2), and/or is dependent on a spacing of an edge of the air-guiding plate (4) from a side wall (16), such that an impedance of the air-guiding plate (4) is adapted to an impedance of the coupling device (7).

4. Cooking appliance (1) according to one of claims 1 - 3, **characterised in that** the spiral-shaped electrical line (10) is configured as a component which may be removed and/or added.

5. Cooking appliance (1) according to claim 4, **characterised in that** the air-guiding plate (4) has an opening (18) designed for passing the component through.

6. Cooking appliance (1) according to one of claims 1 - 5, **characterised in that** the spiral-shaped electrical line (10) is produced from a heat-resistant spring material.

7. Cooking appliance (1) according to one of claims 1 - 6, **characterised in that** the air-guiding plate (4) is produced from a steel plate which is coated with an electrically insulating layer.

8. Cooking appliance (1) according to one of claims 1 - 7, **characterised in that** the air-guiding plate (4) is enamelled.

9. Cooking appliance (1) according to one of claims 1 - 8, **characterised in that** an earth for the planar antenna (8) is galvanically coupled by means of an earth line to a side wall (16) of the cooking chamber (2).

10. Cooking appliance (1) according to one of claims 1 - 9, **characterised in that** the planar antenna (8) is configured for transmitting the high-frequency signal (6) in an ISM band.

11. Cooking appliance (1) according to one of claims 1 - 10, **characterised in that** the transmitter/receiver unit (5) is designed for transmitting a first high-frequency signal (6) by means of the planar antenna (8) to the sensor (9) and/or for receiving a second high-frequency signal (6) provided by the sensor (9) by means of the planar antenna (8) at predeterminable times and/or according to the presence of a triggering signal.

12. Cooking appliance (1) according to one of claims 1 - 11, **characterised in that** the cooking appliance (1) comprises a heating coil (12), a steam generator (13), a microwave generator (14) and/or a fan (15).

13. Cooking appliance (1) according to one of claims 1 - 12, wherein the cooking appliance (1) is configured as an oven, a microwave oven and/or a steam cooker.

14. Method for operating a cooking appliance (1) having a cooking chamber (2) for cooking a product (3) to be cooked according to one of claims 1 - 13, having an air-guiding plate (4) arranged in the cooking chamber (2) and configured as a planar antenna (8), a transmitter/receiver unit (5) for transmitting and/or receiving a high-frequency signal (6) and a coupling device (7) for coupling the transmitter/receiver unit (5) and the air-guiding plate (4), wherein the coupling device (7) comprises a spiral-shaped electrical line (10) for capacitive coupling with the air-guiding plate (4) for transmitting the high-frequency signal (6), and a sensor (9) arranged in the cooking chamber (2), comprising:
transmission (801) of the high-frequency signal (6) between the transmitter/receiver unit (5) and the sensor (9) by means of the planar antenna (8).

## Revendications

1. Appareil de cuisson (1) comprenant un espace de cuisson (2) destiné à la cuisson d'aliments à cuire (3), comprenant un déflecteur d'air (4) se trouvant dans l'espace de cuisson (2), une unité d'émission/réception (5) pour l'émission et/ou la réception d'un signal haute fréquence (6) et comprenant un dispositif de couplage (7) pour le couplage de l'unité d'émission/réception (5) et du déflecteur d'air (4), le déflecteur d'air (4) étant réalisé en tant qu'antenne en nappe (8) pour la transmission du signal haute fréquence (6) entre le dispositif de couplage (7) et un détecteur (9) pouvant être placé dans l'espace de cuisson (2), **caractérisé en ce que** le dispositif de couplage (7) comprend un conducteur électrique hélicoïdal (10) pour le couplage capacitif avec le déflecteur d'air (4) pour la transmission du signal haute fréquence (6).

2. Appareil de cuisson (1) selon la revendication 1, **caractérisé en ce que** le conducteur électrique hélicoïdal (10) se trouve derrière, devant, au-dessus, en dessous et/ou à côté par rapport au déflecteur d'air (4).

3. Appareil de cuisson (1) selon la revendication 1 ou 2, **caractérisé en ce que** la position du conducteur électrique hélicoïdal (10) par rapport au déflecteur d'air (4) se fait en fonction de l'emplacement d'une fixation (17) du déflecteur d'air (4), laquelle fixe le déflecteur d'air (4) sur au moins une paroi latérale (16) de l'espace de cuisson (2), et/ou en fonction d'un écartement d'un bord du déflecteur d'air (4) d'une paroi latérale (16) en sorte que l'impédance du déflecteur d'air (4) s'adapte à l'impédance du dispositif de couplage (7).

4. Appareil de cuisson (1) selon l'une des revendications 1-3, **caractérisé en ce que** le conducteur électrique hélicoïdal (10) est réalisé en tant que module qu'on peut retirer et/ou ajouter.

5. Appareil de cuisson (1) selon la revendication 4, **caractérisé en ce que** le déflecteur d'air (4) comprend un orifice (18) prévu pour l'insertion du module.

6. Appareil de cuisson (1) selon l'une des revendications 1-5, **caractérisé en ce que** le conducteur électrique hélicoïdal (10) est fabriqué en une matière élastique résistant à la chaleur.

7. Appareil de cuisson (1) selon l'une des revendications 1-6, **caractérisé en ce que** le déflecteur d'air (4) est fabriqué en une tôle d'acier, laquelle est revêtue d'une couche électroisolante.

8. Appareil de cuisson (1) selon l'une des revendications 1-7, **caractérisé en ce que** le déflecteur d'air (4) est émaillé.

9. Appareil de cuisson (1) selon l'une des revendications 1-8, **caractérisé en ce qu'**une masse pour l'antenne en nappe (8) est couplée galvaniquement à une paroi latérale (16) de l'espace de cuisson (2) au moyen d'une ligne de masse.

10. Appareil de cuisson (1) selon l'une des revendications 1-9, **caractérisé en ce que** l'antenne en nappe (8) est réalisée pour la transmission du signal haute fréquence (6) dans une bande à ISM.

11. Appareil de cuisson (1) selon l'une des revendications 1-10, **caractérisé en ce que** l'unité d'émission/réception (5) est prévue pour la transmission d'un premier signal haute fréquence (6) au moyen de l'antenne en nappe (8) au détecteur (9) et/ou pour la réception d'un deuxième signal haute fréquence (6) fourni par le détecteur (9) au moyen de l'antenne en nappe (8) à des moments à prédéfinir et/ou en fonction de la présence d'un signal de déclenchement.

12. Appareil de cuisson (1) selon l'une des revendications 1-11, **caractérisé en ce que** l'appareil de cuisson (1) comprend une spirale de chauffage (12), un producteur de vapeur (13), un générateur de micro-ondes (14) et/ou un ventilateur (15).

13. Appareil de cuisson (1) selon l'une des revendications 1-12, dans lequel l'appareil de cuisson (1) est réalisé en tant que four de cuisson, four à micro-ondes et/ou cuiseur vapeur.

14. Procédé de fonctionnement d'un appareil de cuisson (1) comprenant un espace de cuisson (2) destiné à la cuisson d'aliments à cuire (3) selon l'une des revendications 1-13, comprenant un déflecteur d'air (4) se trouvant dans l'espace de cuisson et réalisé en tant qu'antenne en nappe (8), une unité d'émission/réception (5) pour l'émission et/ou la réception d'un signal haute fréquence (6) et comprenant un dispositif de couplage (7) pour le couplage de l'unité d'émission/réception (5) et du déflecteur d'air (4), le dispositif de couplage (7) comprenant un conducteur électrique hélicoïdal (10) pour le couplage capacitif avec le déflecteur d'air (4) pour la transmission du signal haute fréquence (6), et un détecteur situé dans l'espace de cuisson (2), comprenant :
la transmission (801) du signal haute fréquence (6) entre l'unité d'émission/réception (5) et le détecteur (9) au moyen de l'antenne en nappe (8).
